(19) Europäisches Patentamt
European Patent Office
Office européen des brevets

(11) Veröffentlichungsnummer: **0 305 887 A2**

(12) # EUROPÄISCHE PATENTANMELDUNG

(21) Anmeldenummer: 88113819.2

(22) Anmeldetag: 25.08.88

(51) Int. Cl.4: C09B 67/22 , D06P 3/872 , //C09B29/08

(30) Priorität: 02.09.87 DE 3729232
08.03.88 DE 3807479

(43) Veröffentlichungstag der Anmeldung: 08.03.89 Patentblatt 89/10

(84) Benannte Vertragsstaaten: BE CH DE ES FR GB IT LI

(71) Anmelder: HOECHST AKTIENGESELLSCHAFT
Postfach 80 03 20
D-6230 Frankfurt am Main 80(DE)

(72) Erfinder: Hähnke, Manfred, Dr.
Behringstrasse 13
D-6233 Kelkheim (Taunus)(DE)
Erfinder: Müller, Joachim
Hornauer Weg 6
D-6239 Kriftel(DE)
Erfinder: Boos, Margarete
Am See 6
D-6234 Hattersheim am Main(DE)
Erfinder: Hett, Helmut
Langstrasse 6
D-6050 Offenbach(DE)

(54) **Farbstoff-Mischungen zur Herstellung echter Blau- und Marineblau-Färbungen auf Mischmaterialien aus Polyester- und Zellulosefasern.**

(57) Farbstoff-Mischungen, bestehend aus (1) 20 bis 80 Gewichtsprozent eines oder mehrerer blauer Dispersions-Monoazofarbstoffe, (2) 10 bis 40 Gewichtsprozent eines oder mehrerer Küpenfarbstoffe aus der Reihe COLOUR INDEX Vat Blue 43 und 47 (C.I. 53 630) und/oder COLOUR INDEX Vat Blue 42 (C.I. 53 640), und (3) 10 bis 40 Gewichtsprozent eines oder mehrerer Indcarbonfarbstoffe aus der Reihe COLOUR INDEX Sulphur Black 11 (C.I. 53 290) und/oder COLOUR INDEX Sulphur Black 6 (C.I. 53 295) und/oder COLOUR INDEX Sulphur Black 7 (C.I. 53 300), Verfahren zu ihrer Herstellung und ihre Verwendung in Flüssig- oder Pulverform zum Färben von Mischmaterialien aus Polyester- und Zellulosefasern.

EP 0 305 887 A2

Xerox Copy Centre

# Farbstoff-Mischungen zur Herstellung echter Blau- und Marineblau-Färbungen auf Mischmaterialien aus Polyester- und Zellulosefasern

Die vorliegende Erfindung betrifft Farbstoff-Mischungen zur Herstellung echter Blau- und Marineblau-Färbungen auf Mischmaterialien aus Polyester- und Zellulosefasern.

Ein wirtschaftliches Verfahren zur Erzeugung von Blau- und Marineblaufärbungen auf Mischmaterialien aus Polyester- und Zellulosefasern beruht auf der Verwendung von Dispersions- und Küpen-Blaufarbstoffen vom Typ ®Hydron-Blau (zu "Hydron-Blau" siehe Römpps Chemie-Lexikon, 7. Auflage 1973, Seiten 1536 und 1537).

An gefärbte Materialien bzw. Artikel der genannten Art werden nach modernen Gebrauchsgepflogenheiten hohe Waschechtheitsanforderungen gestellt. Insbesondere dann, wenn sie mit harzen und/oder Weichmachern hochveredelt wurden oder wenn die mit Weichmachern behandelten Materialien bei Raumtemperatur längere Zeit gelagert wurden, gelingt es nach dem oben genannten, bisherigen Stand der Technik nicht, eine befriedigende Waschechtheit (beispielsweise nach der weiter unten aufgeführten Prüfungs-Vorschrift) zu erzielen. Das als Begleitmaterial bei der Waschechtheitsprüfung üblicherweise verwendete Mehrfaserband zeigt stets ein starkes blaues oder violettes Anbluten, was besonders für die Zelluloseacetat- und Polyamid-Anteile des Begleitmaterials gilt.

Überraschenderweise wurde nun gefunden, daß man mit Mischungen aus ausgewählten Dispersions-Blaufarbstoffen, Küpen-Blaufarbstoffen vom Typ Hydron-Blau und Schwefel- Schwarzfarbstoffen vom Typ ®Indocarbon (zu "Indocarbon-Farbstoffen" siehe Römpps Chemie-Lexikon, 7. Auflage 1973, S.1587) ein Waschechtheitsergebnis erzielen kann, welches sonst nur mit anderen, wesentlich teureren Farbstoffen möglich ist.

Gegenstand der Erfindung sind im einzelnen Farbstoffmischungen, bestehend aus

(1) 20-80 Gewichtsprozent eines oder mehrerer Dispersions-Blaufarbstoffe der allgemeinen Formeln

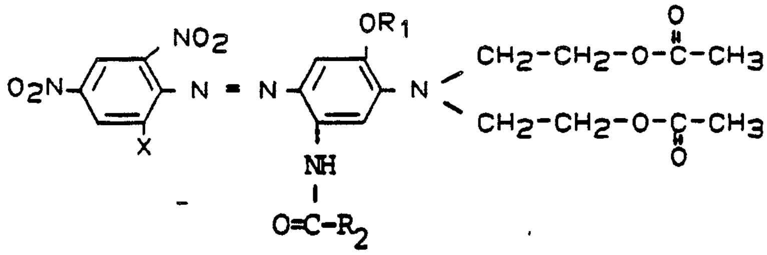

(a) und/oder

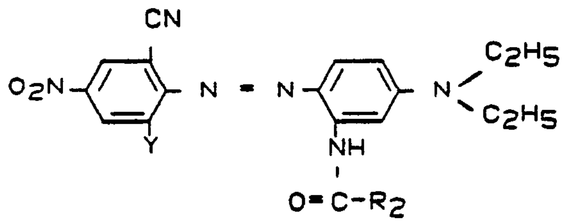

(b) und/oder

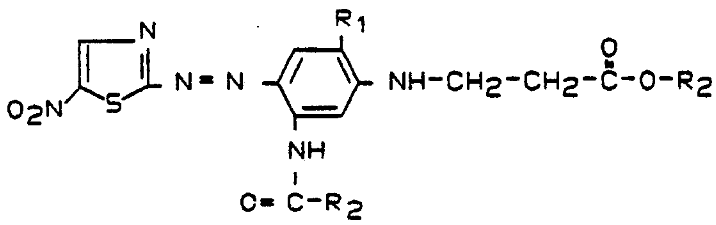

(c) und/oder

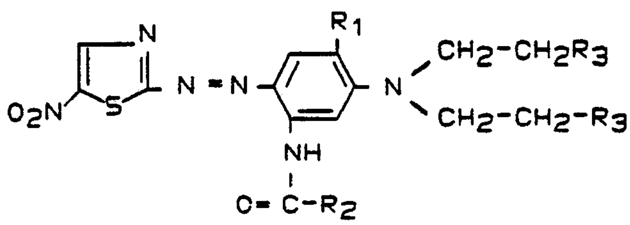

(d)

worin X ein Chlor- oder Bromatom, Y ein Chlor- oder Bromatom oder eine Nitrogruppe, $R_1$ eine Methyl- oder Ethylgruppe, $R_2$ eine Methyl-, Ethyl-, n-Propyl- oder iso-Propylgruppe, und $R_3$ die Gruppierung $-O-\underset{\underset{O}{\|}}{C}-O-R_1$,

$-O-\underset{\underset{O}{\|}}{C}-R_1$

oder $-\underset{\underset{O}{\|}}{C}-O-R_1$

worin $R_1$ die vorstehend genannte Bedeutung hat, darstellen,

(2) 10-40 Gewichtsprozent eines oder mehrerer Küpenfarbstoffe (Hydron-Blau-Farbstoffe) aus der Reihe COLOUR INDEX Vat Blue 43 und 47 (C.I. 53 630) und/oder COLOUR INDEX Vat Blue 42 (C.I. 53 640, und

(3) 10-40 Gewichtsprozent eines oder mehrerer Indocarbonfarbstoffe aus der Reihe COLOUR INDEX Sulphur Black 11 (C.I. 53 290) under/oder COLOUR INDEX Sulphur Black 6 (C.I. 53 295) und/oder COLOUR INDEX Sulphur Black 7 (C.I. 53 300).

Besonders vorteilhaft sind Farbstoff-Mischungen, die aus 20-80 Gewichtsprozent Dispersionsfarbstoff der vorstehend genannten allgemeinen Formel (a), bestehen, in welcher $R_2$ eine Methylgruppe darstellt, und

20-80 Gewichtsprozent einer Mischung aus einem oder mehreren der vorstehend genannten Küpenfarbstoffe und einem oder mehreren der genannten Indocarbon-Farbstoffe, wobei sich das Mengenverhältnis Küpenfarbstoff (Hydron-Blaufarbstoff): Indocarbon-Farbstoff zwischen 80:20 und 50:50 bewegt.

Darüberhinaus können als Nuancierfarbstoffe weitere Farbstoffe anderer Konstitutionen in geringer Menge in den erfindungsgemäßen Farbstoff-Mischungen zugegen sein, sofern sie den Polyesterfaseranteil bzw. Zellulosefaseranteil echt anfärben.

Die erfindungsgemäßen Farbstoff-Mischungen können durch gemeinsamen Finish, d.h. durch gemeinsames Naßvermahlen der für die Mischungen vorgesehenen Farbstoffe in Anwesenheit von Dispergiermitteln oder durch Mischen der separat gefinishten Einzelfarbstoffe hergestellt werden. Die fertigen Mischungen können in Flüssig- oder Pulverform (bzw. Granulat) vorliegen und eingesetzt werden.

Das Färben der genannten Mischfasermaterialien mit den erfindungsgemäßen Farbstoff-Mischungen erfolgt vorzugsweise nach einem Kontinue-Verfahren (Thermosol/ Pad Steam- oder Thermosol/Jigger-Verfahren), es kann aber auch nach dem Ausziehverfahren vorgenommen werden.

Die Waschechtheitsprüfung der mit den erfindungsgemäßen Farbstoff-Mischungen hergestellten Färbungen erfolgt beispielsweise nach folgender Prüfungsvorschrift:

Durchführung gemäß ISO 3 (30 Minuten bei 60 °C bei einem Flottenverhältnis von 1:50 mit 4 g/l ECE-Waschmittel (d.h. eines normgemäßen Waschmittels) und 1 g/l Natriumperborat (Tetrahydrat)). Als Begleitmaterial dient ein Mehrfaserband.

Die erfindungsgemäßen Farbstoff-Mischungen ergeben auf Mischungen aus Polyesterfasern und Zellulosefasern farbstarke Blau- oder Marineblau-Färbungen mit sehr hohen Waschechtheitseigenschaften.

Die Polyesterfaser- und Zellulosefaser-Anteile können in Form einer innigen Mischung, in Form von Kette/Schuß-Mischungen oder in andersartig kombinierter Form vorliegen.

Die Färbeweise für die erfindungsgemäßen Farbstoff-Mischungen entspricht der in der Praxis der Anwendung der Einzelfarbstoffe üblichen, ebenso die Art und Weise der Nachbehandlung (Reoxidation, Seifung).

Die nachfolgend aufgeführten Beispiele dienen der Erläuterung der Erfindung, ohne sie darauf zu beschränken. Unter Teilen und Prozenten sind Gewichtsteile bzw. Gewichtsprozente zu verstehen.

## Beispiel 1

38 Teile des Küpenfarbstoffs COLOUR INDEX Vat Blue 47 (C.I. 53 630) in handelsüblicher Form,
10 Teile des Indocarbonfarbstoffs COLOUR INDEX Sulphur Black 11 (C.I. 53 290) in handelsüblicher Form und
45 Teile des Farbstoffs der Formel

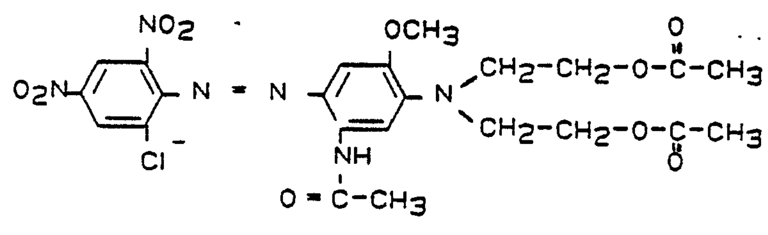

in handelsüblicher Form werden im Mischer gemischt. Von dieser Farbstoff-Mischung stellt man eine wäßrige Färbeflotte folgender Zusammensetzung her:

25 g/l Farbstoff-Mischung,
15 g/l handelsübliches Antimigrationsmittel (Polyacrylat-Typ) und
2 g/l eines Netzmittels vom Typ eines sekundären Alkansulfonats.

Der pH-Wert der Flotte wird durch Zusatz von Essigsäure auf pH 5 gestellt.

Ein Gewebe, bestehend aus einer innigen Mischung aus 60 % Polyester-Stapelfaser und 40 % Baumwolle wird bei Raumtemperatur mit der vorstehend genannten Färbeflotte bei einer Flottenaufnahme von 60 % geklotzt. Dann wird das Gewebe bei 105-110 °C getrocknet und anschließend 60 Sekunden bei 220 °C thermosoliert. Nachfolgend wird mit einer wäßrigen Chemikalienflotte, bestehend aus 50 g/l Hydrosulfit (Natriumdithionit) und 90 $cm^3/l$ Natronlauge 38 °Bé(32,5 %ig) bei Raumtemperatur überklotzt, dann 60 Sekunden bei 102-105 °C im luftfreien Dämpfer gedämpft, anschließend gespült, wie üblich oxidiert,

kochend geseift und gespült.

Man erhält eine Marineblau-Färbung mit sehr guter Ton-in-Ton-Qualität auf beiden Faserarten und mit hervorragender Waschechtheit.

**Beispiel 2**

Man verfährt wie in Beispiel 1 angegeben, wendet aber nach dem Thermosolieren eine Jigger-Entwicklung an unter Verwendung einer wäßrigen Flotte mit 30 $cm^3$/l Natronlauge 38 °Bé, 10 g/l Hydrosulfit und 15 g/l Glaubersalz bei einem Flottenverhältnis von 1:5 während 40 Minuten bei 60-70 °C. Hierbei erhält man ein gleich gutes Resultat.

**Beispiel 3**

Man verwendet 15 Teile des Küpenfarbstoffs COLOUR INDEX Vat Blue 43 (c.i. 53 630), 4 Teile des Indocarbonfarbstoffs COLOUR INDEX Sulphur Black 6 (C.I. 53 295), 16 Teile des Farbstoffs der Formel

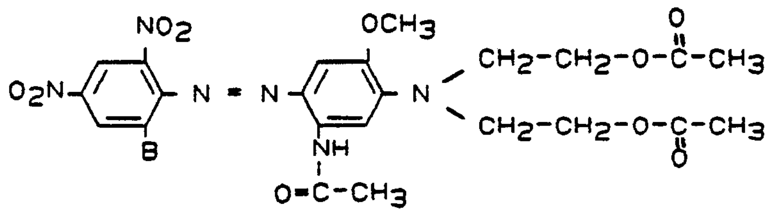

und 4 Teile des Nuancierfarbstoffs der Formel

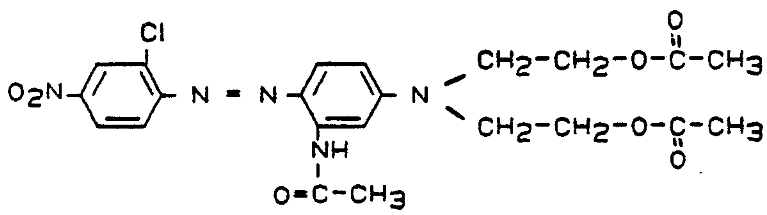

zusammen mit 61 Teilen eines handelsüblichen Dispergiermittels aus der Reihe der Ligninsulfonate und 500 Teilen Wasser und erzeugt auf einer Perlmühle eine feinverteilte stabile Farbstoffdispersion.

Dieses Flüssigpräparat ergibt nach einem praxisüblichen Thermosol-Pad-Steam-Verfahren angewandt auf Mischungen aus Polyesterfasern und Zellulosefasern Marineblau-Färbungen, die auch nach einer Harz/Weichmacher-Hochveredlung, sowie nach längerer Lagerung dieser Ware bei Raumtemperatur eine ausgezeichnete Waschechtheit zeigen.

**Beispiel 4**

Wie in Beispiel 3 beschrieben, werden 12 Teile des Farbstoffs der Formel

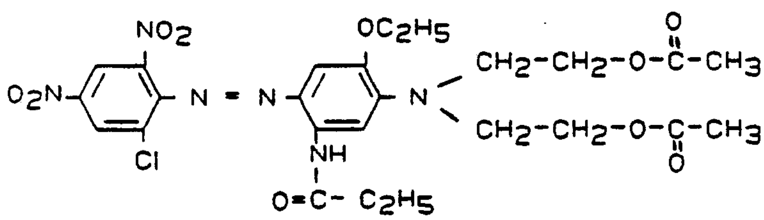

(1)

3 Teile des Farbstoffs der Formel

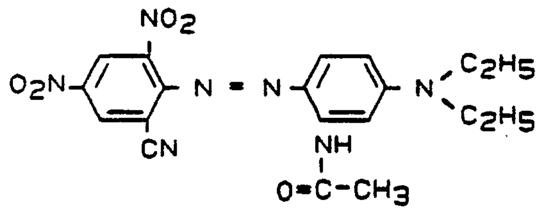

(2)

3 Teile des Farbstoffs der Formel

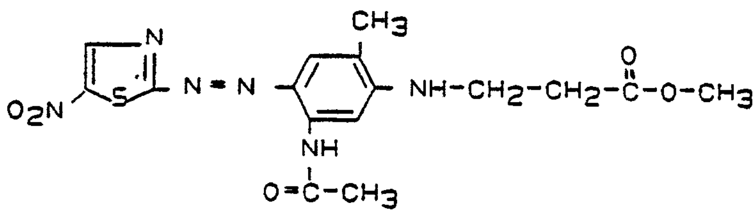

(3)

2 Teile des Nuancierfarbstoffs der Formel

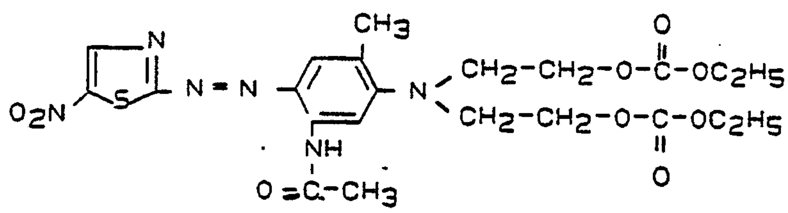

(4)

60 Teile des Küpenfarbstoffs COLOUR INDEX Vat Blue 42 (C.I. 53 640), 20 Teile des Farbstoffs COLOUR INDEX Sulphur Black 7 (C.I. 53 300) unter Zugabe von 150 Teilen Dispergiermittel vom Typ Ligninsulfonat sowie von Wasser fein dispergiert.

Die erhaltene Dispersion wird über einen Sprühtrockner in ein Pulverpräparat überführt, welches nach dem Thermosol-Pad-Steam-Verfahren angewandt, auf einem Textilgewebe, bestehend aus 20 Teilen Polyester und 80 Teilen Baumwolle, eine außergewöhnlich waschechte Marineblau-Färbung ergibt.

Ersetzt man den vorstehend genannten Farbstoff der Formel (2) durch einen Farbstoff, der anstelle der Cyangruppe ein Chlor- oder Bromatom oder eine Nitrogruppe enthält, so erhält man eine Farbstoffmischung, mit welcher beim Färben des genannten Mischgewebes nach dem angegebenen Verfahren ein gleich gutes Ergebnis erzielt wird.

## Ansprüche

1. Farbstoff-Mischungen, bestehend aus

(1) 20-80 Gewichtsprozent eines oder mehrerer Dispersions-Blaufarbstoffe der allgemeinen Formeln

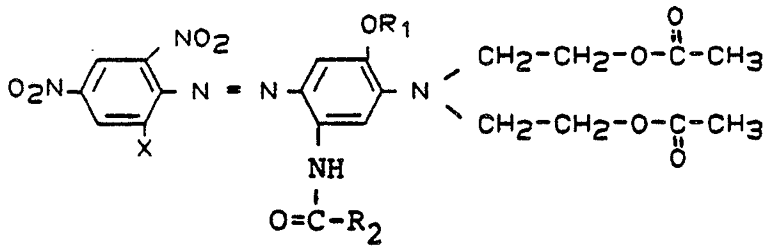

(a) und/oder

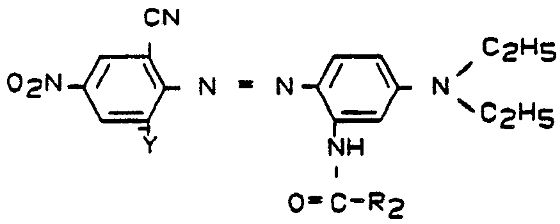

(b) und/oder

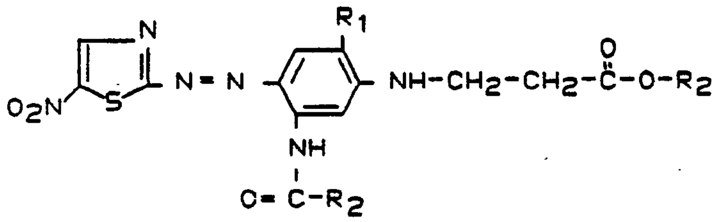

(c) und/oder

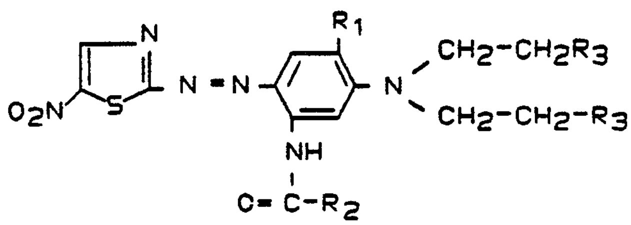

(d)

worin X ein Chlor- oder Bromatom; Y ein Chlor- oder Bromatom oder eine Nitrogruppe, $R_1$ eine Methyl- oder Ethylgruppe, $R_2$ eine Methyl-, Ethyl-, n-Propyl oder iso-Propylgruppe, und $R_3$ die Gruppierung $-O-\underset{\underset{O}{\|}}{C}-OR_1$,

$-O-\underset{\underset{O}{\|}}{C}-R_1$

oder $-\underset{\underset{O}{\|}}{C}-O-R_1$

worin $R_1$ die vorstehend genannte Bedeutung hat, darstellen,

(2) 10-40 Gewichtsprozent eines oder mehrerer Küpenfarbstoffe aus der Reihe COLOUR INDEX Vat Blue 43 und 47 (C.I. 53 630) und/oder COLOUR INDEX Vat Blue 42 (C.I. 53 640), und

(3) 10-40 Gewichtsprozent eines oder mehrerer Indocarbonfarbstoffe aus der Reihe COLOUR INDEX Sulphur Black 11 (C.I. 53 290) und/oder COLOUR INDEX Sulphur Black 6 (C.I. 53 295) und/oder COLOUR INDEX Sulphur Black 7 (C.I. 53 300).

2. Farbstoff-Mischungen, bestehend aus 20-80 Gewichtsprozent eines Dispersionsarbstoffs der allgemeinen Formel

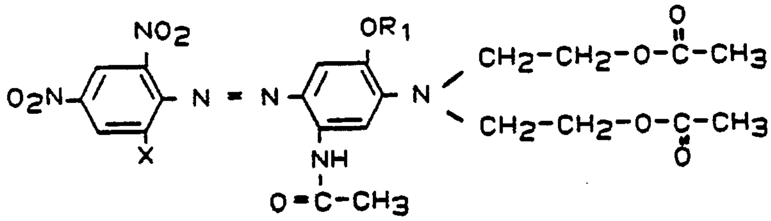

in welcher X ein Chlor- oder Bromatom und $R_1$ eine Methy- oder Ethylgruppe bedeuten, und 20-80 Gewichtsprozent einer Mischung aus einem oder mehreren Küpenfarbstoffen aus der Reihe COLOUR INDEX Vat Blue 43 und 47 (C.I. 53 630) und/oder COLOUR INDEX Vat Blue 42 (C.I. 53 640) und aus einem oder mehreren Indocarbonfarbstoffen aus der Reihe COLOUR INDEX Sulphur Black 11 (C.I. 53 290) und/oder COLOUR INDEX Sulphur Black 6 (C.I. 53 295) und/oder COLOUR INDEX Sulphur Black 7 (C.I. 53 300) wobie sich das Mengenverhältnis Küpenfarbstoff: Indocarbonfarbstoff zwischen 80:20 und 50 : 50 bewegt.

3. Farbstoff-Mischungen nach mindestens einem der Ansprüche 1 und 2, dadurch gekennzeichnet, daß diese weitere Nuancierungsfarbstoffe, welche den Polyesterfaseranteil bzw. Zellulosefaseranteil echt anfärben, enthalten.

4. Herstellung der in Ansprüchen 1-3 genannten Farbstoff-Mischungen, dadurch gekennzeichnet, daß man die für die Farbstoff-Mischungen vorgesehenen Farbstoffe in Anwesenheit von Dispergiermitteln gemeinsam naßvermahlt, (finisht) oder die separat gefinishten Einzelfarbstoffe mischt.

5. Verwendung der in mindestens einem der Ansprüche 1-3 genannten Farbstoff-Mischungen in Flüssig- oder Pulverform zum Färben von Mischmaterialien aus Polyesterfasern und Zellulosefasern.